# EUROPEAN PATENT APPLICATION

(11) **EP 2 485 021 A1**
(43) Date of publication of application: **08.08.2012**
(21) Application number: 12152780.8
(22) Date of filing: 27.01.2012
(51) Int. Cl.: G01J 3/02, G01J 3/12, G01J 3/18, G02B 5/18, G02B 5/20, G02F 1/29

(54) **Spectroscopic device**

(30) Priority: 04.02.2011 JP 2011022525
(71) Applicant: Ricoh Company, Ltd., Tokyo 143-8555 (JP)
(72) Inventor: Sakai, Atsushi, Tokyo 143-8555 (JP)
(74) Representative: Schwabe - Sandmair - Marx

(57) **Abstract**

Disclosed is a spectroscopic device that includes a light input unit to which light from a light source is input; optical elements; an optical deflection element; a reflector element that reflects the light emitted from the optical deflection element; and a photodetector. The optical deflection element includes a refractive index change region made of a material having an electro-optical effect and electrodes arranged to pinch the refractive index change region. The reflector element is a resonator filter having wavelength selectivity such that light having a predetermined wavelength is resonantly reflected.

## Description

### BACKGROUND OF THE INVENTION

### 1. Field of the Invention

An embodiment of the present invention relates to a spectroscopic device. Specifically, the embodiment relates to a spectroscopic device using a high-speed optical scanning device.

### 2. Description of the Related Art

Conventionally, many devices which utilize spectroscopic techniques have been proposed. For example, a spectroscopic device which utilizes a distributed diffractive grating and a spectroscopic device which utilizes an acousto-optic device have been known. In the spectroscopic device which utilizes the distributed diffractive grating (cf., for example, Patent Document 1 (Japanese Published Unexamined Application No. 2007-187550) and Patent Document 2 (Japanese Published Unexamined Application No. 2006-201127)), dispersion by the distributed diffractive grating can be measured with a high resolution. However, there is a problem that a light intensity of diffracted light is reduced by an effect of higher-order diffracted light. Thus it may be necessary to provide slits, but in this case the light intensity is attenuated. Therefore, it may not possible to avoid a growth in size of the optical system. Further, there is a problem that, since it may be necessary that the spectroscopic device depends on mechanical driving, fast dispersion may not be expected.

On the other hand, as a spectroscopic device which does not include a mechanical driving unit, the spectroscopic device which utilizes the acousto-optic device has been known. In the spectroscopic device including the acousto-optic device, since Bragg diffraction is utilized, the problem of the above described diffractive grating does not exist. Further, since an acoustic wave is used, relatively faster dispersion is possible. However, a large amount of energy is consumed by a transducer for generating the acoustic wave, and a driving circuit is complicated. Further, there is a problem that core components included in the spectroscopic device are large.

Incidentally, a high-speed spectroscopic device, which utilizes an optical deflection element using an electro-optical effect and a dispersive element, such as a prism, a diffractive grating, or an acousto-optic tunable filter (AOF), has been disclosed (cf. Patent Document 3 (WO2008/005525)). The optical deflection element using the electro-optical effect can deflect light at high speed by applying an electric voltage. The deflected light is dispersed by the prism, which is the dispersive element. Then a focusing position of the light is varied by deflecting the light, and a wavelength of the light passing through a slit can be varied.

With the configuration of the device described in Patent Document 3, high-speed dispersion can be realized. However, the dispersion characteristic of the dispersing prism depends greatly on the material of the prism. Therefore, there is a problem that a wavelength range, within which light can be dispersed, is limited. Further, for the devices described in Patent Document 1 and Patent Document 2, there are problems that light intensities are reduced, similar to the spectroscopic device having the mechanically driven diffractive grating. Further, since an integrated optical design including a design of a slit may be required, there is a problem that downsizing of the spectroscopic device may be difficult.

An objective of the embodiment is to provide a spectroscopic device that enables high-speed dispersion and highly sensitive spectroscopy, and that can be downsized.

### SUMMARY OF THE INVENTION

In one aspect, there is provided a spectroscopic device including a light input unit to which light from a light source is input; optical elements; an optical deflection element; a reflector element that reflects the light emitted from the optical deflection element; and a photodetector. The optical deflection element includes a refractive index change region made of a material having an electro-optical effect and electrodes arranged to pinch the refractive index change region. The reflector element is a resonator filter having a wavelength selectivity such that light having a predetermined wavelength is resonantly reflected.

According to the embodiment, the spectroscopic device enables high-speed dispersion and highly sensitive spectroscopy. Further the spectroscopic device can be downsized compared to a conventional spectroscopic device.

Other objects, features and advantages of the present invention will become more apparent from the following detailed description when read in conjunction with the accompanying drawings.

### BRIEF DESCRIPTION OF THE DRAWINGS

FIG. 1 is a schematic configuration diagram showing an example of a spectroscopic device of an embodiment;
FIG. 2 is a schematic diagram illustrating a configuration of an optical deflection element;
FIG. 3 is a graph showing a relationship between an applied voltage and a deflection angle of an optical deflection element, which is made of a lithium niobate material;
FIG. 4 is a graph in which light-output voltages with respect to frequencies of operating voltages of the optical deflection element are plotted;
FIG. 5A is a perspective view of a resonator filter;
FIG. 5B is a sectional view of the resonator filter;
FIG. 6 is a simulation model diagram of the resonator filter included in the spectroscopic device of the embodiment;
FIG. 7 is a graph showing a result of the simulation model of the resonator filter shown in FIG. 6;
FIG. 8 is a graph in which reflection spectra with respect to incident angles of the resonator filter are plotted;
FIG. 9A shows a top view and a sectional view of another example of the resonator filter included in the spectroscopic device of the embodiment;
FIG. 9B shows a top view and a sectional view of another example of the resonator filter included in the spectroscopic device of the embodiment;
FIG. 10 is a schematic diagram showing an example of a resonator filter, whose surface area is divided; and
FIG. 11 is a schematic diagram showing an example of a resonator filter, whose surface area is divided.

### DETAILED DESCRIPTION OF THE PREFERRED EMBODIMENTS

Hereinafter, a spectroscopic device according to an embodiment of the present invention is explained by referring figures. Here, the embodiment is not limited to the description below, and the embodiment may be modified within a range which can be conceived by a person skilled in the art. For example, another embodiment may be added to the embodiment, a description may be added to the embodiment, or a description of the embodiment may be corrected or deleted. Any of the above modified embodiments is deemed to be included in the scope of the embodiment of the present invention, provided that the modified embodiments have the same effect as that of the embodiment of the present invention.

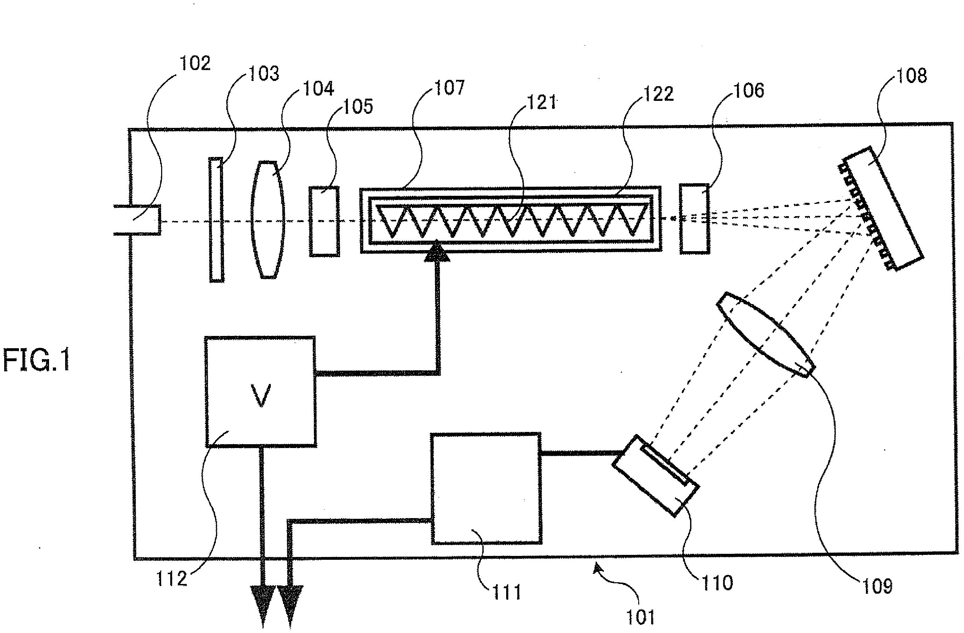

FIG. 1 shows a schematic configuration of the spectroscopic device 101 of the embodiment. As shown in FIG. 1, the spectroscopic device 101 of the embodiment includes a light input unit 102 to which light from a light source is input, optical elements (a polarizer 103, a collimation lens 104, condensing lenses 105 and 106, and a lens 109), an optical deflection element 107, a reflector element 108 which reflects light emitted from the optical deflection element 107, and a photodetector 110. Further, the spectroscopic device 101 includes a signal control unit 111, a signal detection unit (not shown in the figures), and a voltage application control unit 112. In the optical deflection element 107, a refractive index change region 121, which is formed with a material having an electro-optical effect, and electrodes 122, which pinch the refractive index change region 121, are arranged. The reflector element 108 is a resonator filter having a wavelength selectivity such that light having a predetermined wavelength is resonantly reflected (hereinafter, the reflector element 108 is referred to as "resonator filter").

The light having various wavelengths that enters the light input unit 102 is adjusted to be linearly-polarized light that oscillates in the direction perpendicular to the plane of the paper by the polarizer 103. Subsequently, the linearly-polarized light is converted to parallel light whose width is in a range of from several hundreds µm to several mm by the collimation lens 104, and the parallel light is input to the optical deflection element 107 by the condensing lens 105. In the example shown in FIG. 1, a cylindrical lens that condenses the light only in the direction perpendicular to the plane of the paper, while retaining the width of the light in the direction parallel to the plane of the paper, is used as the condensing lens 105. Here, as the collimation lens 104, only one lens is schematically shown in FIG. 1. However, the collimation lens 104 may be formed by a group of plural lenses.

In the optical deflection element 107, the electrodes 122 are arranged to pinch the refractive index change region 121. An electric voltage in a range from several hundreds volts to several kilo volts from the voltage application control unit 112 is applied to the electrodes 122. The refractive index change region 121 is formed by successive polarization reversal portions. Here, each of the polarization reversal portions has a prism shape (a triangular prism shape). When an electric voltage is applied to the refractive index change region 121, a polarity of a refractive index change in a triangle, which is schematically shown in FIG. 1, is changed to have a polarity which is opposite to a polarity of the refractive index change outside the triangle. For example, when the refractive index change in the triangle is (- Δ n) when the electric voltage is applied, the refractive index change outside the triangle is (+ Δ n).

Here, the configuration of the refractive index change region 121 is not limited to the configuration according to the embodiment, which includes the group of the polarization reversal portions having the same triangular prism shape, as shown in FIG. 1. For example, the refractive index change region 121 may includes the polarization reversal portions forming a horn-shaped prism such that the height of the triangular prism shape of the polarization reversal portion closer to the output side is greater than the height of the triangular prism shape of the polarization reversal portion closer to the input side.

The refractive index change region 121 is formed of a material having an electro-optic effect. For example, the refractive index change region 121 is formed by using a polarization reversal technique which utilizes an electro-optic crystal. When an electric voltage is applied to the electrodes 122, an electric field is generated and the refractive index is changed by the Pockels effect in the electro-optic crystal forming the refractive index change region 121. Since the plus and minus of the refractive index change is reversed by the polarization reversal, the light is deflected when the refractive index change portions having the triangular shape are formed. The change of the refractive index depends on the intensity of the applied electric voltage, and the deflection angle increases as the intensity of the applied electric voltage is increased. Further, when the polarity of the electric voltage is changed, the deflection direction is reversed to the opposite direction with respect to the central axis. Alternatively to the method of forming the region in which the refractive index is reversed by the polarization reversal technique, a refractive index change in accordance with shapes of the electrodes may be provided by forming the electrodes themselves to be in the triangular shapes.

The light deflected by the optical deflection element 107 is collimated by the condensing lens 106, and the collimated light enters the resonator filter 108. The resonator filter 108 has a wavelength selectivity, and the resonator filter 108 has a configuration such that a wavelength of a reflected light depends on an incident angle of an incident light beam (details are described later). Therefore, as shown in the schematic diagram of FIG. 1, when light beams having different deflection directions enter the resonator filter 108, the resonator filter 108 selects wavelengths corresponding to the incident angles, and the light beams having the corresponding wavelengths are reflected. The reflected light beams having the specific wavelengths are condensed by the lens 109 and enter the photodetector 110. The photodetector 110 converts the entered light beams into an electric signal, and the electric signal is output as an output signal. The output signal is output from the signal control unit 111 to an external I/O.

With such a configuration, a wavelength of reflected light, which is reflected on the resonator filter 108, can be controlled by application of an electric voltage. Therefore, a spectroscopic device 101 which does not require a movable portion, and which enables high-speed dispersion depending on a speed of the application of the electric voltage, can be obtained. Further, the resonator filter 108 enables dispersion at a high reflection ratio. Thus the efficiency is high. Further, since it is not necessary to place a slit immediately front of the photodetector 110, an effect of stray light between the wavelengths can be reduced.

### [Optical deflection element]

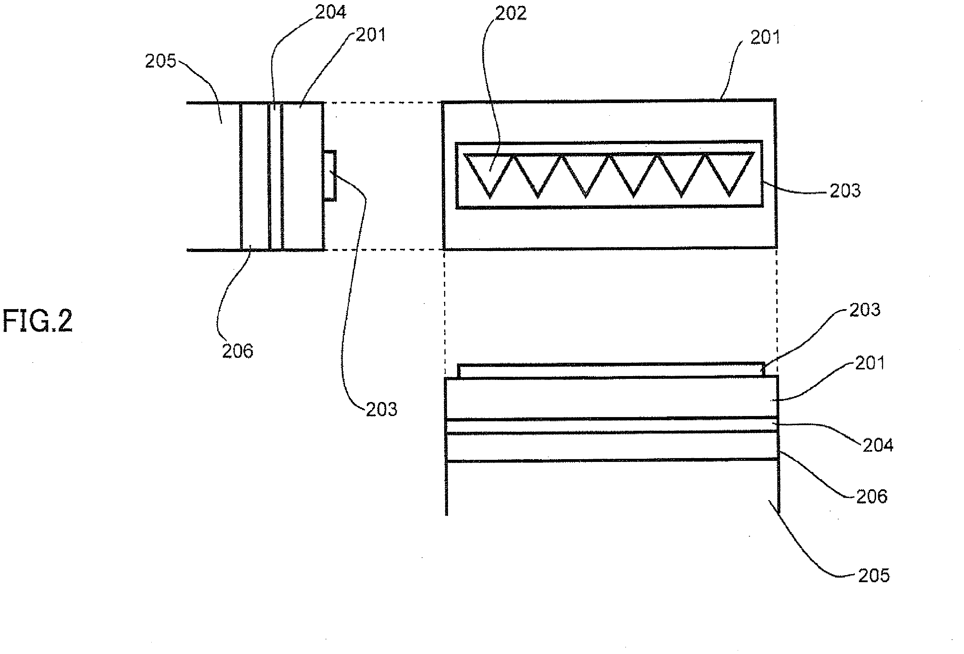

Hereinafter, the optical deflection element 107, which is utilized in the spectroscopic device 101 according to the embodiment, is explained. FIG. 2 schematically shows a configuration of the optical deflection element 107. In the optical deflection element 107, the refractive index change region 201 is formed of the material having the electro-optic effect (the electro-optic crystal). Here, the optical deflection element 107 made of lithium niobate (LiNbO₃: LN) is shown as an example. As shown in FIG. 2, electrodes 203 and 204 are arranged to pinch the refractive index change region 201 (hereinafter, referred to as "a lithium niobate substrate). The lithium niobate substrate 201, on which the electrodes 203 and 204 are formed, is adhered to a support substrate 205 by an adhesion bond layer 206.

On the lithium niobate substrate 201, the polarization reversal portion 202, which is formed by a resist pattern including successive triangular shapes having a height of about 3 mm and a width of about 1 mm, is formed by photolithography. When a high electric voltage, which exceeds a coercive electric field, is applied so as to pinch the lithium niobate substrate 201, the electric field is directly applied to a portion that does not have the resist and the polarization is reversed at the portion. Thus a polarization reversal portion 202, which has triangular shapes corresponding to the resist pattern, and in which the polarization is changed, can be formed. With such a polarization reversal, the refractive index change region having different polarizations can be formed.

Since the polarization reversal portion 202 is formed as a pattern by the photolithography, it is possible to form plural closely-aligned patterns on the substrate at once. Further, it is possible to produce a polarization reversal substrate using the plural closely-aligned patterns. If a mask pattern is prepared in advance, an arbitrary pattern can be formed in an area by a method, which is almost the same as a method for forming a single pattern in the same area.

Areas of the electrodes 203 and 204, which are formed to cover the area of the polarization reversal portion 202, may be sufficient, if the areas cover the polarization reversal portion 202 without overs and shorts. Further, the electrode 204 is formed in advance, so as to pinch the lithium niobate substrate 201, whose polarization is reversed. The thickness of the substrate 201 is in a range from 300 µm to 500 µm. However, considering that the electrodes 203 and 204 are formed on the front and rear sides of the substrate 201, and that a refractive index change is caused by an application of an electric voltage, it is more preferable that the width across which the electric voltage is applied be smaller, so as to realized a low-voltage operation. It is preferable that a light propagation area be formed of a thin film material. Namely, by reducing the thickness of the lithium niobate substrate 201, the low-voltage operation is enabled.

However, when the thickness of the substrate 201 is small, a support structure may be required so as to keep the mechanical strength. FIG. 2 shows a structure which is supported by the support substrate 205. As shown in FIG. 2, the lithium niobate layer 201, on which the polarization reversal portion 202 is formed, is attached to the support substrate 205 through the adhesion bond layer 206. Such a structure can be produced by attaching the substrate 201, on which the polarization reversal portion 202 and the electrode 204 are formed, to the support substrate 205 with an adhesive (the adhesion bond layer 206), and by polishing one of the surfaces of the substrate 201 which is opposite to the surface on which the electrode 204 is formed, so that the substrate 201 becomes a thin film. When the substrate is thinner, a lower-voltage operation is possible. However, a more accurate processing technique may be required. Therefore, the thickness of the lithium niobate substrate 201 may be in a range from 10 µm to 20 µm.

For a material of the support substrate 205, a material having the same thermal expansion coefficient as that of the refractive index change region 201 is preferable. For example, a lithium niobate substrate is preferable. However, the support substrate may be a silicon substrate, a quartz substrate, or a glass substrate. Further, it suffices if the thickness of the support substrate is about 500 µm.

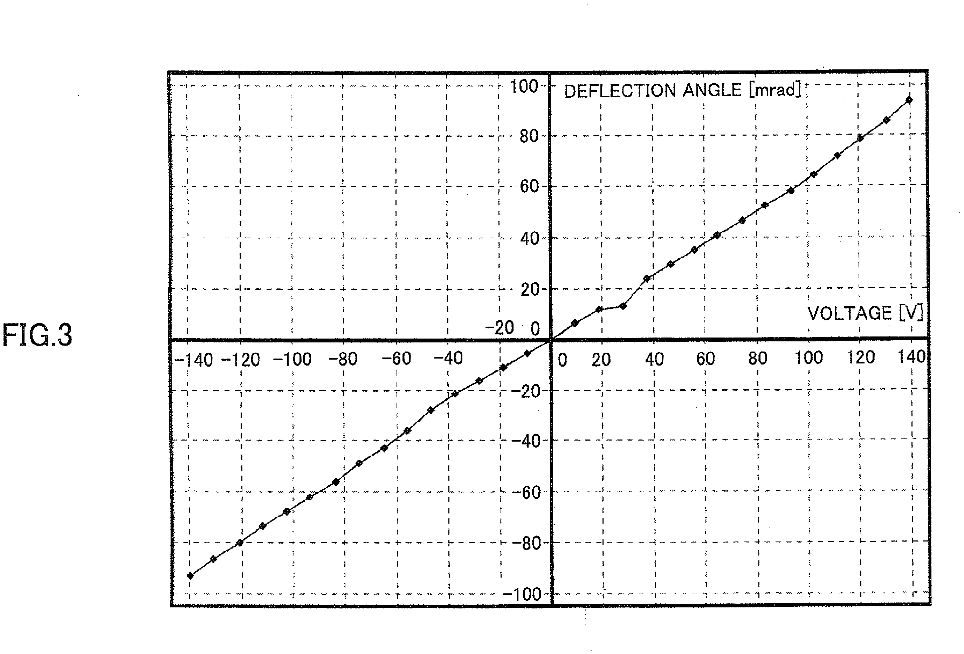

FIG. 3 shows a relationship between an applied electric voltage and a deflection angle in an optical deflection element made of a lithium niobate material, as a material having an electro-optical effect. By the Pockels effect, the refractive index change becomes greater as the applied electric voltage increases. Thus the deflection angle can be linearly increased. Since, at the portion through which the light propagates, the thickness is reduced to 10 µm, the electric voltage for obtaining the maximum deflection angle is also reduced to a lower voltage of about 150 V. Here, when the thickness of the substrate crystal is about 300 µm and the thickness is not reduced, the electric voltage which may be required for deflecting the light is 30 times as much as the voltage which may be required when the substrate is a thin film. In such a case, a complicated power supply may be required, and there is a problem that power consumption is increased.

The optical deflection element 107 having the characteristic shown in FIG. 3 is **characterized in that** the voltage and the deflection angle are in a one-to-one correspondence relationship. Thus an arbitrary deflection angle is achieved by applying the corresponding electric voltage. Namely, the deflection angle and the deflection frequency can be determined only by the applied voltage. It is difficult to realize such a deflection of light by mechanical driving. Further, with the optical deflection element 107 having the characteristic shown in FIG. 3, scanning with respect to the deflection angle may be performed by random access.

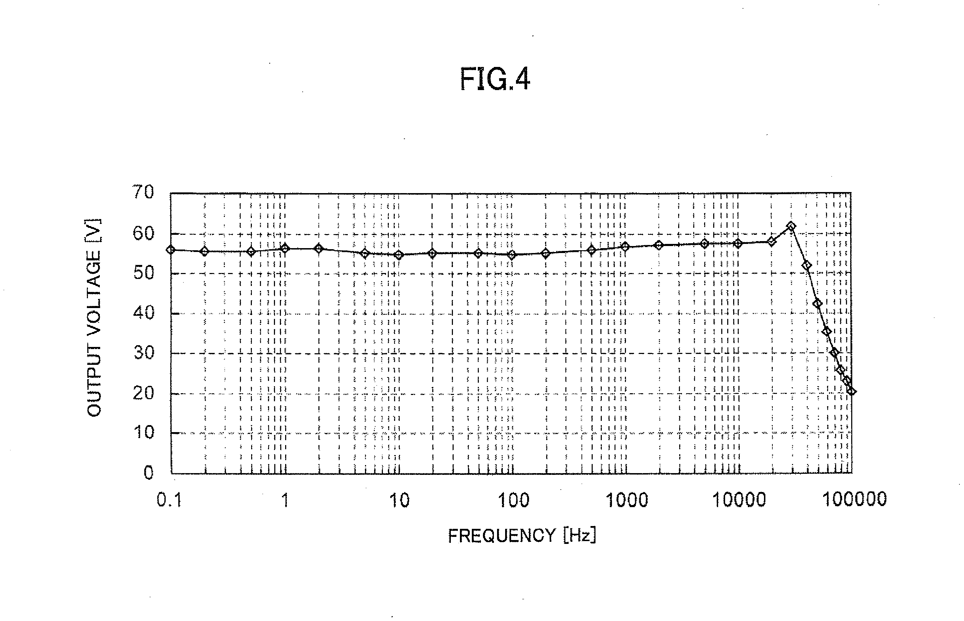

FIG. 4 shows a graph in which output light voltages corresponding to frequencies of an operating voltage of the above described optical deflection element are plotted. FIG. 4 shows that the optical deflection element 107 outputs a constant voltage within a frequency range from 0.1 Hz to 20 kHz. When the frequency is greater than or equal to 20 kHz, the output voltage is reduced, because of the performance of a voltage supply that generates the applied electric voltage. Potentially, it is possible to output the constant voltage up to a frequency of about 100 kHz. Therefore, with the above described optical deflection element, which is used in the spectroscopic device 101 according to the embodiment of the present invention, operations of higher-speed and random scanning are possible, compared to a conventional optical deflection element which utilizes a resonance phenomenon.

Further, since the above described optical deflection element can cause a complicated deflection with respect to an arbitrary frequency, a flexible deflection is possible, provided that the frequency associated with the applied voltage is up to about 100 kHz. For example, when the frequency associated with the voltage is varied by 100 Hz, the frequency associated with the voltage may be locally varied by 10 kHz. Further, by adopting an optical deflection element of the optical waveguide type, a relatively lower-voltage operation is enabled. Thus a voltage control unit can be established with a flexible electric circuit design. The number of resolvable spots of the above described optical deflection element depends on a diameter of an entered beam. However, the actual value is within a range from 100 points to 300 points.

### [Resonator filter]

Hereinafter, the resonator filter 108, which is used in the spectroscopic device 101 according to the embodiment of the present invention as a reflector element, is explained. The resonator filter 108 has wavelength selectivity such that light having a specific wavelength is resonantly reflected. The resonator filter 108 is a narrowband optical filter having a periodic structure. Here, the period of the periodic structure is almost the same as the specific wavelength. The resonator filter 108 is also referred to as a guided-mode resonant grating or a resonant mode grating. When the pitch of the periodic structure and a wavelength of incident light satisfy a particular resonant condition, resonance occurs. Thus, with this property, a reflection type wavelength filter having a very narrow bandwidth can be produced. Theoretically, the reflection ratio at the resonant frequency reaches up to 100%. Thus a higher light intensity can be efficiently obtained compared to a grating which generates higher order diffraction light. Further, since the resonator filter 108 is a wavelength selection filter, light having a wavelength other than the reflection wavelength passes through the resonator filter 108. This is one of the characteristics of the resonator filter 108 which is used in the spectroscopic device 101 according to the embodiment of the present invention, in comparison with a reflection type diffraction grating which diffracts all wavelengths.

Theoretically, with a wavelength filter formed of a multilayer film, the reflection ratio reaches up to 100% for normal incident light. However, for the wavelength filter, there are problems that the reflection ratio is reduced for obliquely incident light, and that the full-width at half-maximum of the reflection spectrum is enlarged.

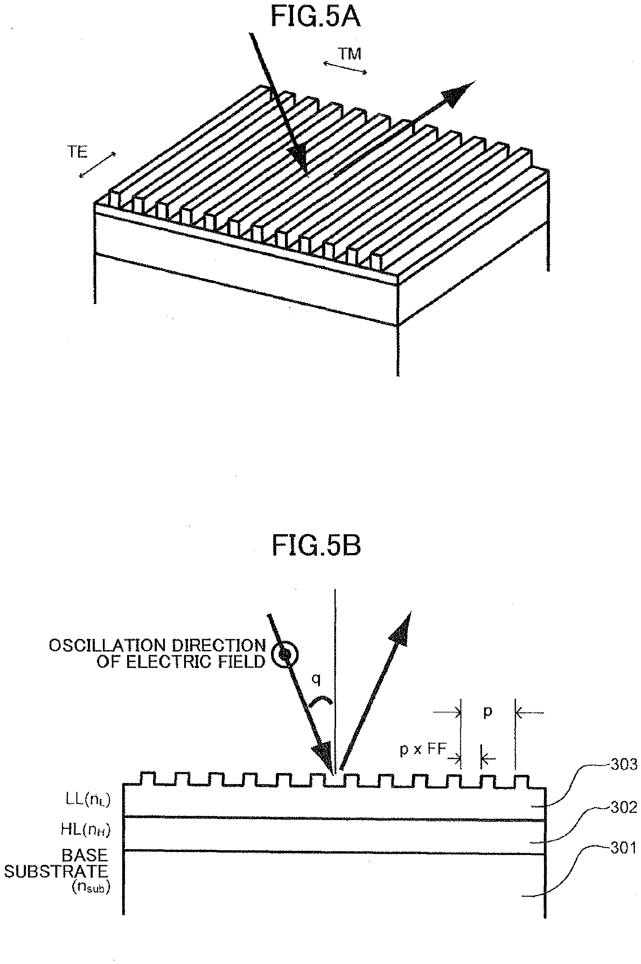

FIGS. 5A and 5B show an example of a configuration of the resonator filter 108 having a usual periodic structure arranged in one direction, namely, having a one-dimensional periodic structure. Here, FIG. 5A is a perspective view, and FIG. 5B is a sectional view. The resonator filter 108 includes two types of materials having different refractive indexes. On a base substrate layer 301 a guiding layer 302 is formed. Here, the base substrate layer 301 is made of a low-refractive-index material having a relatively lower refractive index nL. The guiding layer 302 is made of a high-refractive-index material having a relatively higher refractive index nH. Further, a periodic structure layer 303, which is made of the low-refractive-index material, is formed on a top surface of the guiding layer 302. Here, the refractive index nH is greater than the refractive index nL. Hereinafter, when the two types of materials are used, a layer which is made of the material having the relatively higher refractive index is referred to as a high-refractive-index layer, and a layer which is made of the material having the relatively lower refractive index is referred to as a low-refractive-index layer. In the resonator filter 108 shown in FIG. 5, among the entered light beams, only the light beams having the wavelength that resonates with the periodic structure layer 303 are coupled with the guided mode of the guiding layer 302, and are resonantly reflected.

As shown in FIG. 5B, the periodic structure layer 303 has a periodic structure such that relief structures are arranged in one direction with a period p. A width of the grating is defined by a coefficient FF (0 < FF < 1) with respect to the period. In such a one-dimensional periodic structure, the reflection ratio depends on a polarization direction. Therefore, as shown in FIG. 5A, a component of light having electric field oscillations in a direction parallel to the grooves is referred to as TE polarized light, and light having electric field oscillations in a direction perpendicular to the grooves is referred to as TM polarized light.

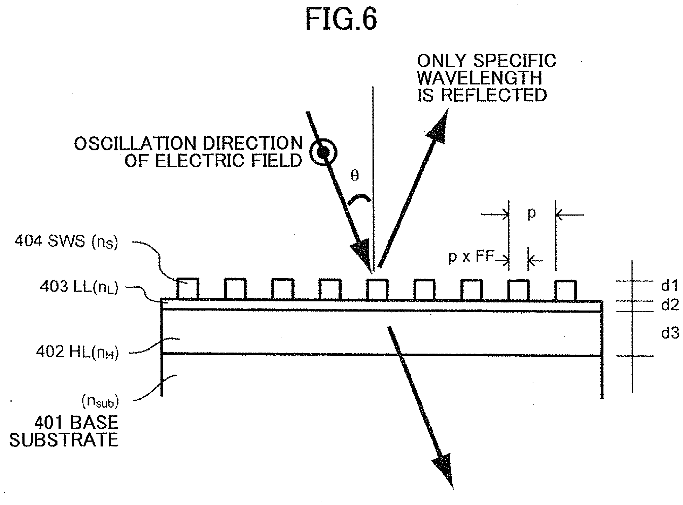

The resonator filter 108 used in the spectroscopic device 101 according to the embodiment is designed using the rigorous coupled-wave analysis (RCWA). FIG. 6 shows a simulation model of the resonator filter 108. As shown in FIG. 6, the resonator filter 108 is formed by laminating a high-refractive-index layer 402, a low-refractive-index layer 403, and a sub-wavelength structure (SWS) layer 404, in this order, on the base substrate 401. The simulation is performed while setting the refractive index ns of the base substrate 401 to be 1.51, the refractive index nH of the high-refractive-index layer 402 to be 2.23, and the refractive index nL of the low-refractive-index layer 403 to be 1.44. It is assumed that the quality of the material of the sub-wavelength structure layer 404 is the same as that of the high-refractive-index layer 402, and that the refractive index nS of the sub-wavelength structure layer 404 is 2.23. Further, the simulation is performed with respect to the oscillation direction of the electric field shown in FIG. 6, while the period p is set to be 250 nm, and the filing rate FF is set to be 0.4. Further, the simulation is performed while the width d1 of the high-refractive-index layer 402 is set to be 100 nm, the width d2 of the low-refractive-index layer 403 is set to be 50 nm, and the width d3 of the sub-wavelength structure layer 404 is set to be 300 nm.

Namely, in the embodiment, the resonator filter 108, which is used in the spectroscopic device 101 and which is simulated by the model of FIG. 6, is formed by laminating the high-refractive index layer 402, whose refractive index nH is relatively high, and the low-refractive index layer 403, whose refractive index nL is relatively low, on the base substrate 401 having the refractive index nsub. The sub-wavelength structure layer 404 having the refractive index nS, which is made of the material having the same quality as the quality of the material of the high-refractive-index layer 402, has the periodic structure such that the relief structures are arranged in one direction with a period, which is less than or equal to the desired wavelength.

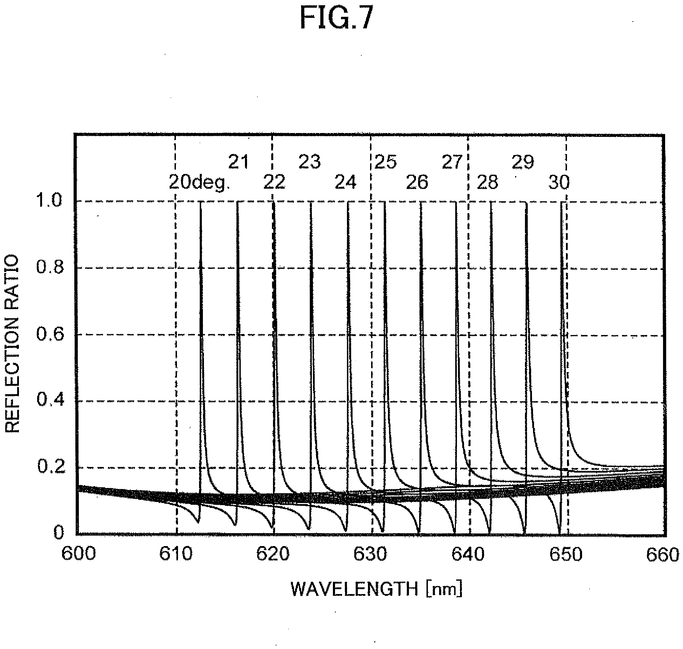

FIG. 7 shows an example of the result of the simulation of FIG. 6. FIG. 7 shows optical spectra, when the incident angle is varied from 20 degrees to 30 degrees. Here, the parameters have been set, so that the light beams having wavelengths in the range from 600 nm to 650 nm can be dispersed. It can be seen that the wavelength of the reflected light beam varies depending on the incident angle, and that the light beams emitted from the optical deflection element 107 can be dispersed depending on the incident angles. Further, it can be seen that, in the simulation, the reflection ratio reaches 100%, and that the light beams having the wavelengths corresponding to the incident angles are efficiently reflected.

The deflection angle of the light beam emitted from the optical deflection element 107 can be continuously changed by continuously changing the electric voltage applied to the optical deflection element 107, which is used in the spectroscopic device 101. Therefore, the resolution of the spectroscopic device 101 depends on the performance of the resonator filter 108.

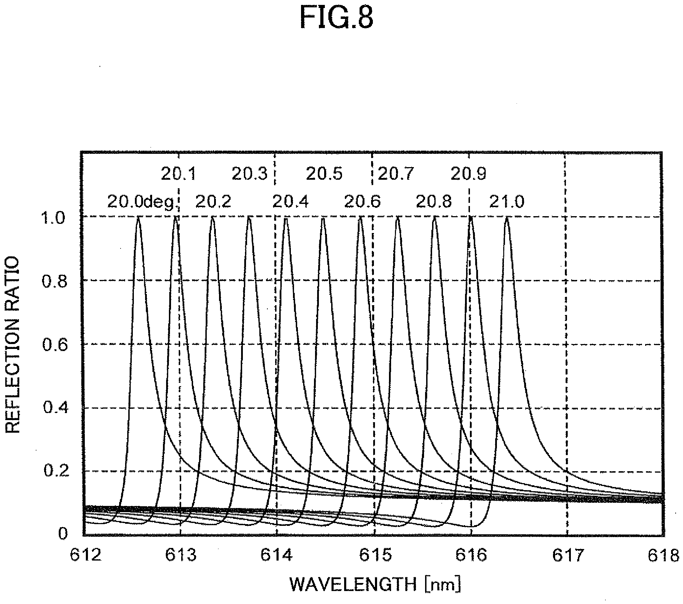

FIG. 8 is a graph in which reflection spectra from the resonator filter 108 with respect to corresponding incident angles are plotted in detail. In the graph of FIG. 8, the reflection spectra are plotted for the plural incident angles. Here, each incident angle of the reflection spectrum at the right hand side is increased by 0.1 degrees with respect to the incident angle of the neighboring reflection spectrum at the left hand side. From FIG. 8, it can be understood that the resolution of the resonator filter 108 is finer than or equal to 1 nm. When the resolution is defined by the half value of a spectrum, the wavelength resolution of the resonator filter 108 is about 0.5 nm. It implies that the resonator filter 108 enables the spectroscopy at the resolution of sub-nm.

In the resonator filter 108, a spectral line width or a center wavelength can be relatively easily adjusted by the setting of the parameters (e.g., the thickness of the layer, the refractive index, or the period).

As the materials included in the above described resonator filter 108, for example, a synthetic quartz glass can be used for the base substrate 401, titanium oxide (TiO₂) can be used for the high-refractive-index layer 402, and silicon dioxide (SiO₂) can be used for the low-refractive-index layer 403. By using a general method, such as sputtering or deposition, uniform layers can be formed of the corresponding materials. In addition to the above described materials, for example, silicone, quartz, or sapphire can be used for the base substrate 401, tantalum pentoxide (Ta₂O₅), or hafnia can be used for the high-refractive-index layer 402, and magnesium oxide can be used for the low-refractive-index layer 403. Further, in addition to the inorganic materials, organic materials can be used.

The sub-wavelength structure portion of the above described resonator filter 108 can be formed by lithography and etching. Here, the sub-wavelength structure portion of the resonator filter 108 may be formed by patterning the periodic structure, which is shorter than the wavelength, with electron beam lithography and by etching titanium oxide by dry etching.

Hereinafter, the principle of the spectroscopy in the spectroscopic device 101 according to the embodiment is explained. As described above, the optical deflection element 107 can deflect light continuously at a high speed. At this time, since the light is deflected within a range from -5 degrees to 5 degrees (10 degrees in total), when the center of the incident angle is set to be 25 degrees, the incident angle can be adjusted within the range from 20 degrees to 30 degrees. Further, when the wavelength corresponding to the incident angle of 25 degrees is set to be about 630 nm, the reflected light beams, which are obtained by deflecting the light, correspond to the wavelengths. Namely, the incident angle of the incident light from the optical deflection element 107 can be varied by the voltage. Thus, when a specific voltage is applied to the optical deflection element 107, the light component having a specific wavelength corresponding to the incident angle of the light is reflected. Therefore, a spectrum is obtained.

In comparison with a conventional spectroscopic device, which can be obtained by combining a high-speed optical deflection element and a high-dispersion prism or a high-dispersion diffraction grating, with the configuration of the spectroscopic device 101 according to the embodiment, the wavelength separation by the dispersion and the selection of the wavelength by the slit can be simultaneously performed by the resonant filter 108. Hence, an arrangement of high-precision optical components is not required. Therefore, further downsizing of the device is possible. Further, since the wavelength dispersion is converted into angular variations, for a small angular variation by an optical deflection element for a smaller deflection angle, wavelengths can be separated with high sensitivity.

When a diffraction grating is used, power of reflected light is necessarily attenuated by effects of higher order modes. When a blazed grating is used as a distributed diffraction grating, a binary type may be used. In such a case, the zeroth order diffracted light or the first order diffracted light is in a range from about 60% to about 80%. On the other hand, when the above described resonator filter 108 is used, theoretically, the perfect reflection (reflection of 100%) is realized, and a reflection rate of at least 90% can be realized.

Usually, the incident light is weak. However, a high-performance photodetector is not required, provided that the light can be efficiently collected at a phtodetector. Thus the cost of the device can be reduced. Further, when the above described resonant filter 108 is used, a position adjustment mechanism for separating the wavelength-dispersed light is not required. Therefore, the downsizing of the device can be realized.

The resonant filter 108 according to the embodiment including the sub-wavelength structure layer has a basic structure such that a low-refractive index layer 1 (refractive index: nL1), a high-refractive index layer (refractive index: nH), a low-refractive index layer 2 (refractive index: nL2, where nL1 and nL2 may be different), and the sub-wavelength structure layer (refractive index: nS) are laminated on the base substrate (refractive index: nsub). Since the high-refractive index layer is pinched between the low-refractive index layer 1 and the low-refractive index layer 2, when light is guided to the high-refractive index layer, the high-refractive index layer becomes an optical waveguide layer. The sub-wavelength structure layer may be formed to be an independent layer, or the sub-wavelength structure layer may be directly formed on the low-refractive index layer 2. Further, the sub-wavelength structure may be directly formed on the high-refractive index layer. A position at which the sub-wavelength structure may be arranged or a formation method of the sub-wavelength structure may be suitably selected depending on a condition, such as an effect which is expected to be obtained from the resonator filter 108 or a manufacturing process of the resonator filter 108. The following cases can be considered for the patterns of the refractive indexes (materials) of the layers included in the resonator filter 108:
(1) nsub, nL1, nH, nL2, and nS are different;
(2) nsub and nL1 are the same (made of the same material);
(3) nsub and nL1 are the same, and nL2 and nS are the same (made of the same materials); and
(4) nsub and nL1 are the same, and nH, nL2, and nS are the same, but nL1 and nH are different refractive indexes.

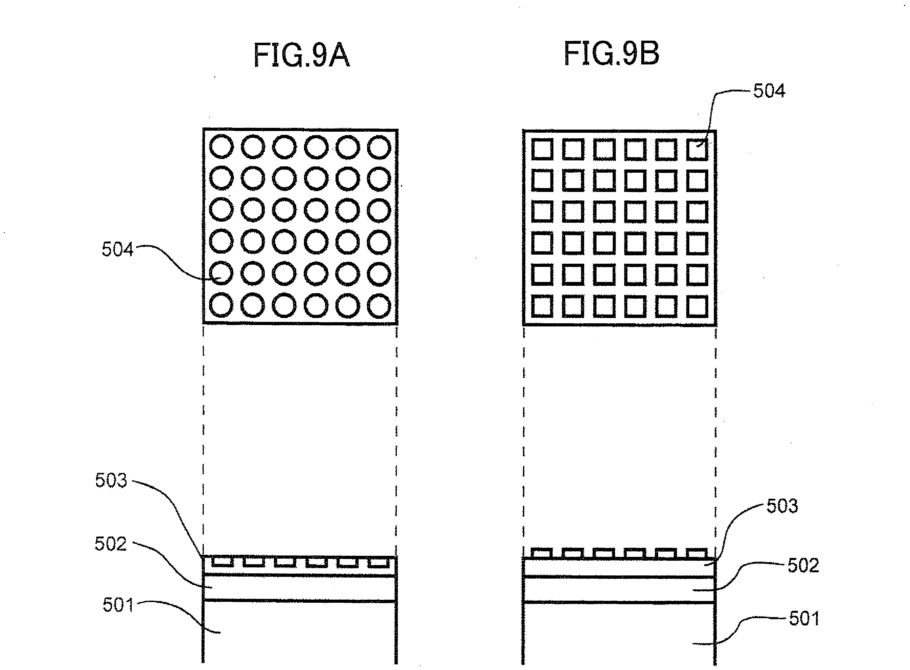

Further, as shown in FIGS. 9A and 9B, the resonator filter 108 used in the spectroscopic device 101 according to the embodiment may be such that a high-refractive index layer 503 where the refractive index is relatively high and a low-refractive index layer 502 where the refractive index is relatively low are laminated on a base substrate 501, and a top portion of the high-refractive index layer 503, specifically, at least a part of the high-refractive index layer 503 formed on the upper-most surface, includes a periodic structure such that the horizontal section has two-dimensional relief structures formed to have a pitch less than or equal to a desired wavelength. FIGS. 9A and 9B show examples in which sub-wavelength structures formed of the high-refractive index material are arranged on the upper-most surface of the high-refractive index layer 503. Here, the horizontal sections of the sub-wavelength structures are two-dimensionally shaped. Such two-dimensional periodic structures are sometimes referred to as photonic crystal arrays.

As shown in the vertical sectional views in FIGS. 9A and 9B, the low-refractive index layer 502 and the high-refractive index layer 503 are formed on the base substrate 501, and the sub-wavelength structure is formed by applying patterning to the high-refractive index layer 503. Here, the sub-wavelength structure may be formed by the concave portions as shown in FIG. 9A, or may be formed by the convex portions as shown in FIG. 9B. Further, the pattern may be formed in a circular shape as shown in FIG. 9A or in a rectangular shape as shown in FIG. 9B. The pattern may be formed in a shape corresponding to a desired wavelength characteristic. When the sub-wavelength structure has such a configuration, the characteristic of the resonator filter 108 depends on the deflection direction of the light. Further, with such an air-bridge structure, the structural strength of the resonator filter 108 is improved.

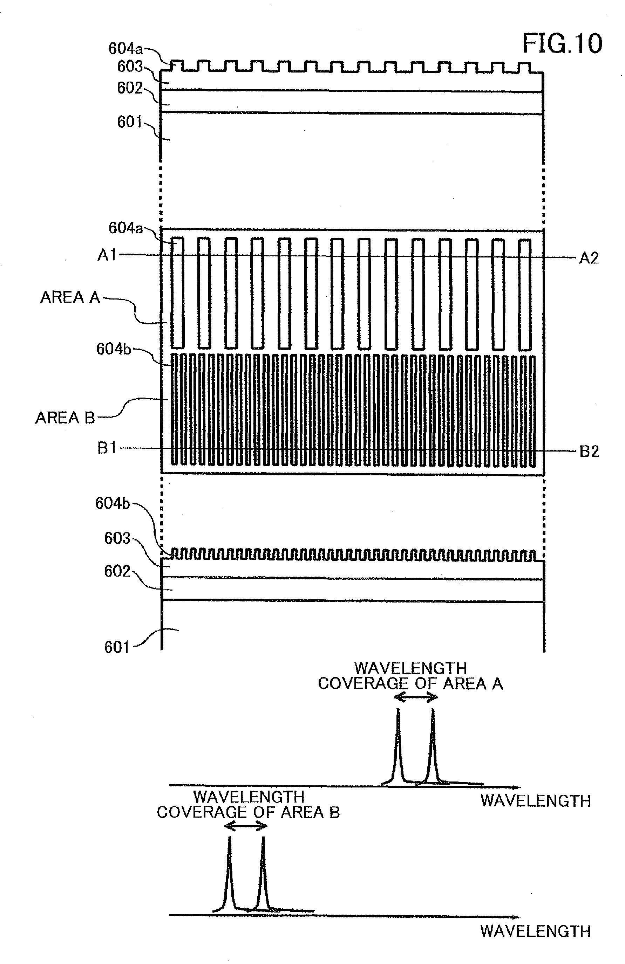

The wavelength coverage of the sub-wavelength structure 504 depends on the period of the sub-wavelength structure 504, and the wavelength coverage of the sub-wavelength structure 504 is about 100 nm. In order to disperse the light in another range, a different resonant filter may be required. Alternatively, in order to disperse the light in another range, the resonator filter 108 may include a periodic structure such that the area of the resonator filter 108 is divided into plural areas within the same plane, and each of the areas includes a periodic structure formed with relief structures having a pitch, which is different from a pitch of relief structures in another area, as shown in FIG. 10.

FIG. 10 shows an example of a resonator filter 108, whose surface area is divided. A high-refractive-index layer 602 and a low-refractive-index layer 603 are formed on a base substrate 601. On an area A, a sub-wavelength structure layer 604a is formed with a first pitch. On an area B, a sub-wavelength structure layer 604b is formed with a second pitch. The first pitch and the second pitch are different. Here, the figure placed above the top view in FIG. 10 is a figure of the section of the area A along the line A1-A2, viewed from the side of the area A. Similarly, the figure below the top view in FIG. 10 is a figure of the section of the area B along the line B1-B2, viewed from the side of the area B. The sub-wavelength structure layers 604a and 604b may be formed of a material which is the same as that of the high-refractive index layer 602, or the sub-wavelength structure layers 604a and 604b may be formed of a material which is the same as that of the low-refractive index layer 603. When the sub-wavelength structure layers 604a and 604b are formed of the material which is the same as that of the low-refractive index layer 603, the sub-wavelength structure layers 604a and 604b can be formed by forming periodic structures with corresponding relief structures on the low-refractive index layer 603, at the same time that the low-refractive index layer 603 is formed. Thus a process for forming the sub-wavelength structures layers as new layers can be omitted. Here, for the structure in which the area is divided, the sub-wavelength structure layers corresponding to the plural divided areas can be formed at once by controlling the pattern.

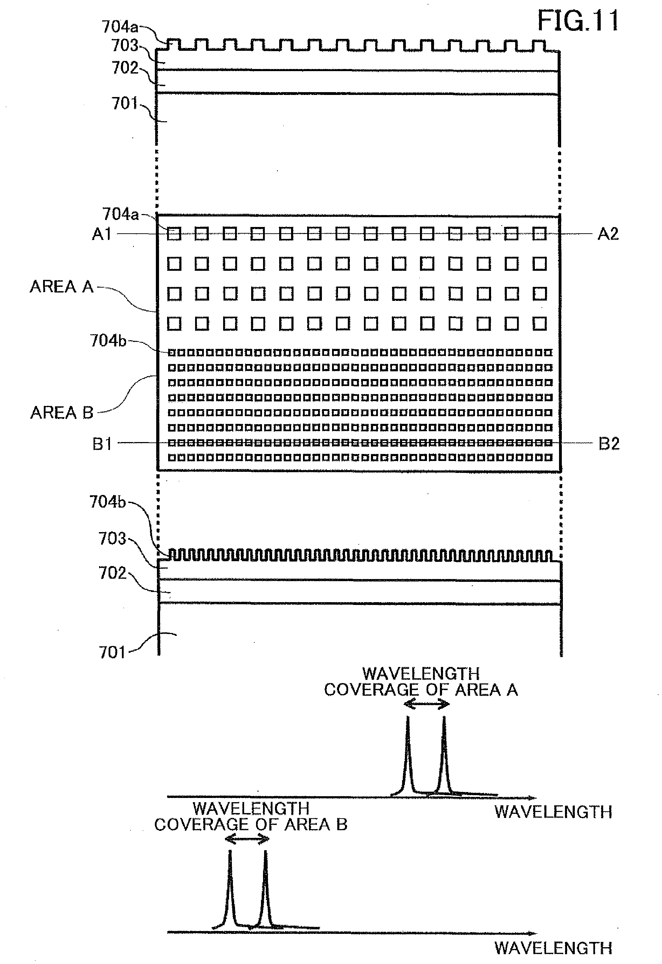

FIG. 11 shows another example of a resonator filter 108, whose surface areas are divided. A high-refractive-index layer 702 and a low-refractive-index layer 703 are formed on a base substrate 701. On an area A, a sub-wavelength structure layer 704a is formed with a first pitch. On an area B, a sub-wavelength structure layer 704b is formed with a second pitch. Here, the first pitch and the second pitch are different. Here, the figure placed above the top view in FIG. 11 is a figure of the section of the area A along the line A1-A2, viewed from the side of the area A. Similarly, the figure below the top view in FIG. 11 is a figure of the section of the area B along the line B1-B2, viewed from the side of the area B. The sub-wavelength structure layers 704a and 704b may be formed of a material which is the same as that of the high-refractive index layer 702, or the sub-wavelength structure layers 704a and 704b may be formed of a material which is the same as that of the low-refractive index layer 703.

The present invention is not limited to the specifically disclosed embodiments, and variations and modifications may be made without departing from the scope of the present invention.

The present application is based on Japanese Priority Application No.2011-022525, filed on February 4, 2011, the entire contents of which are hereby incorporated herein by reference.

## Claims

1. A spectroscopic device comprising:
a light input unit to which light from a light source is input;
optical elements;
an optical deflection element;
a reflector element that reflects the light emitted from the optical deflection element; and
a photodetector,
wherein the optical deflection element includes a refractive index change region made of a material having an electro-optical effect and electrodes arranged to pinch the refractive index change region, and
wherein the reflector element is a resonator filter having a wavelength selectivity such that light having a predetermined wavelength is resonantly reflected.

2. The spectroscopic device according to claim 1, wherein the refractive index change region of the optical deflection element includes a successive polarization reversal portions, each of the polarization reversal portions having a prism shape.

3. The spectroscopic device according to claim 1 or claim 2,
wherein a light propagation region of the optical deflection element is formed of a thin-film member.

4. The spectroscopic device according to any of claim 1 through claim 3,
wherein the resonator filter is formed by laminating a high-refractive-index layer having a relatively higher refractive index and a low-refractive-index layer having a relatively lower refractive index on a base substrate, and
wherein the resonator filter includes a periodic structure which is formed on the high-refractive-index layer, the periodic structure being formed with a relief structure arranged in one direction and having a pitch equal to or less than a desired wavelength.

5. The spectroscopic device according to any of claim 1 through claim 3,
wherein the resonator filter is formed by laminating a high-refractive-index layer having a relatively higher refractive index and a low-refractive-index layer having a relatively low refractive index on a base substrate, and
wherein the resonator filter includes a periodic structure which is formed on the high-refractive-index layer, wherein a horizontal section of the periodic structure includes a two-dimensionally shaped relief structure having a pitch equal to or less than a desired wavelength.

6. The spectroscopic device according to claim 4, wherein the resonator filter includes plural of the periodic structures formed on a same surface, each of the plural periodic structures being formed with a corresponding relief structure arranged in one direction and having a pitch equal to or less than a desired wavelength, and
wherein the pitches are different from each other.

7. The spectroscopic device according to claim 5, wherein the resonator filter includes plural of the periodic structures formed on a same surface, each of the plural periodic structures being formed with a corresponding two-dimensionally shaped relief structure having a pitch equal to or less than the desired wavelength, and
wherein the pitches are different from each other.
